# EUROPÄISCHE PATENTSCHRIFT

(11) **EP 0 390 951 B1**
(45) Veröffentlichungstag und Bekanntmachung des Hinweises auf die Patenterteilung: **30.06.1993**
(21) Anmeldenummer: 89106088.1
(22) Anmeldetag: 06.04.1989
(51) Int. Cl.: A61C 17/08

(54) **Zahnärztliches Saughandstück**
Dental suction hand piece
Outil manuel pour aspiration dentaire

(43) Veröffentlichungstag der Anmeldung: 10.10.1990
(73) Patentinhaber: SIEMENS AKTIENGESELLSCHAFT, 80333 München (DE)
(72) Erfinder: Landgraf, Hermann, Dipl.-Ing., D-6143 Lorsch (DE); Helfrich, Hans, D-8600 Mannheim (DE)

(56) Entgegenhaltungen:
- DE-U- 8 606 069
- FR-A- 2 443 825
- US-A- 4 807 370

## Beschreibung

Die Erfindung betrifft ein zahnärztliches Saughandstück, an welchem einerseits eine Saugkanüle und andererseits ein Saugschlauch anschließbar ist.

Bekannte Saughandstücke bestehen in der Regel aus einem rotationssymmetrischen, geraden oder zum freie Ende hin leicht gebogenen Rohr, welches mit dem Saugschlauch entweder fest oder lösbar verbunden ist. Ausführungen mit lösbarer Verbindung weisen häufig zwischen Schlauchanschluß und dem Saughandstück ein kleines Filter auf, das dazu dient, größere Saugpartikel, insbesondere Gold- und Amalgamfüllungen, abzufangen. Bei einem bekannten solchen Saughandstück (DE-U-8 606 069) ist zwischen dem Saugrohr und dem Saugschlauch eine aus zwei miteinander verschraubten Gehäuseteilen bestehende Steckkupplung vorgesehen, in der das Filter wechselbar eingesetzt ist.

Nachteilig bei solchen Saughandstücken ist, daß sich einerseits durch das Gewicht des Schlauches und der abgesaugten Partikel, andererseits durch die Handhabung selbst ein gewisser Zug auf das rückwärtige Ende des Saughandstückes wirkt, wodurch sich eine gewisse Hecklastigkeit am Handstück einstellt. Darüber hinaus kommt es nicht selten vor, daß das Saughandstück im Gebrauch relativ steil mit nach unten gerichteter Kanüle gehalten werden muß, wodurch der Saugschlauch im Bereich der Anschlußstelle mit dem Handstück einen sehr engen Bogen bildet. An dieser Stelle besteht dann erhöhte Gefahr, daß der Schlauch abgeknickt wird und zum Einreißen neigt.

Der im Anspruch 1 angegebenen Erfindung liegt die Aufgabe zugrunde, ein zahnärztliches Saughandstück zu schaffen, bei dem die Ergonomie des Handstückes verbessert und damit die Hecklastigkeit in der Handhabung beseitigt ist. Um das Ansetzen von Bakterien und Keimen möglichst zu unterbinden, ist ferner ein Saugquerschnitt mit möglichst glattem Durchgang anzustreben.

Dadurch, daß gemäß der Erfindung am Handstück eine drehbare Kupplungsstelle vorgesehen ist, die es ermöglicht, die zwei Teile unter Beibehaltung des Durchflußquerschnittes wahlweise in eine gerade oder eine geschwenkte Stellung zu bringen, wird die Handhabung des Handstückes erheblich verbessert, insbesondere die Hecklastigkeit beseitigt. Durch die vorgeschlagenen Maßnahmen bleibt der Durchflußquerschnitt in jeder Position erhalten, wodurch sich eine gleichmäßig niedrige Strömungsgeschwindigkeit und damit auch ein niedriger Geräuschpegel einstellt.

Das Drehgelenk ist vorzugsweise durch innenliegende Zylinderabschnitte gebildet, die stirnseitig aneinandergrenzen und im gekuppelten Zustand der Teile von einer kugelförmigen äußeren Mantelfläche übergriffen werden. Alternativ ist es möglich, das Drehgelenk durch ineinandergreifende, an den Stirnseiten vorzugsweise schräg geschnittene Kugelabschnitte zu bilden.

Ein Ausführungsbeispiel der Erfindung wird anhand der Zeichnung näher erläutert. Es zeigen:
- FIG 1: ein zahnärztliches Saughandstück mit einer Saugkanüle und einem Teil eines Saugschlauches in einer typischen Gebrauchshaltung,
- FIG 2: die in FIG 1 gezeigte Anordnung teilweise im Längsschnitt und im demontierten Zustand,
- FIG 3: das Saughandstück in einer geraden Schwenkposition,
- FIG 4 und 5: Detaildarstellungen von einem Handstückteil des Saughandstückes,

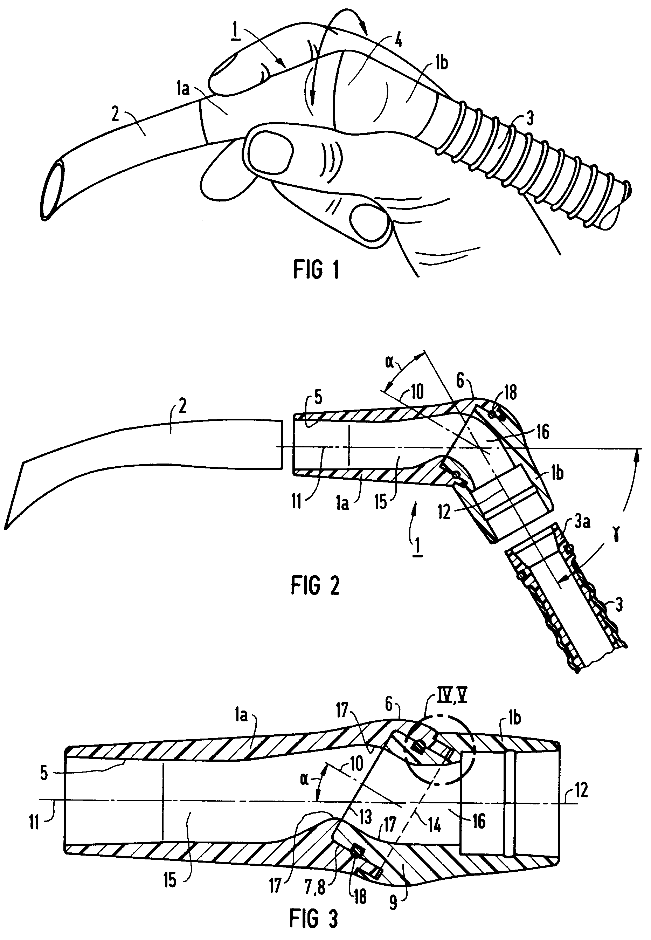

Die FIG 1 zeigt in einer schaubildlichen Darstellung ein allgemein mit 1 bezeichnetes zahnärztliches Saughandstück zusammen mit einer Saugkanüle 2 und einem Saugschlauch 3 in einer typischen Gebrauchsstellung, in der die Saugkanüle 2 relativ steil mit nach unten auf eine nicht näher bezeichnete Absaugstelle gerichtet ist. Das Saughandstück 2 besteht aus zwei Teilen, einem vorderen Teil 1a, an dem die Saugkanüle 2 aufsetzbar ist, und einem rückwärtigen Teil 1b, an dem der Saugschlauch 3 abnehmbar befestigt ist. Wie später noch näher erläutert, können die beiden Teile 1a, 1b so in Pfeilrichtung gegeneinander verdreht werden, daß sie aus der in den FIG 1 und 2 gezeigten, abgewinkelten Position in eine gerade Position (FIG 3) bringbar sind. Ermöglicht wird dies durch ein allgemein mit 4 bezeichnetes Drehgelenk an der Verbindungsstelle zwischen den beiden Teilen 1a und 1b.

Die FIG 2 zeigt die Saughandstückanordnung gemäß FIG 1 mit abgenommener Saugkanüle 2 und abgenommenen Schlauch 3; die FIG 3 das Saughandstück in einer geraden Position. Das der Saugkanüle 2 zugewandte vordere Ende 5 des Handstückteiles 1a ist zur Aufnahme der Saugkanüle 2 leicht konisch ausgebildet. Das rückwärtige Ende 6 enthält eine zylindrische innere Mantelfläche 7, die eine ebenfalls zylindrische äußere Mantelfläche 8 des Endteiles 9 des Handstückteiles 1b übergreift. Die Zylinderachsen 10 der durch die Mantelflächen 7, 8 gebildeten Zylinder verlaufen zu den Rotationssymmetrieachsen 11, 12 der Handstückteile 1a, 1b unter einem Winkel α = 30°, wobei die ebenfalls um den Winkel α zu den Rotationssymmetrieachsen geneigten, stirnseitigen Anschlußflächen 13, 14 einen kreisförmigen Querschnitt aufweisen, wodurch sich die beiden Handstückteile 1a, 1b um die Drehachse 10 gegeneinander so verschwenken lassen, daß in der einen Stellung die Längsachsen der beiden Handstückteile einen Winkel γ = 60° einschließen (FIG 2) und im anderen Falle die Achsen miteinander fluchten (FIG 3). Wie aus den FIG 2 und 3 ersichtlich, sind die beiden Leitungskanäle 15, 16 durch bogenförmige Krümmungen 17 miteinander verbunden, wodurch ein sauberer Übergang ohne störende Stufen und Kanten gebildet wird.

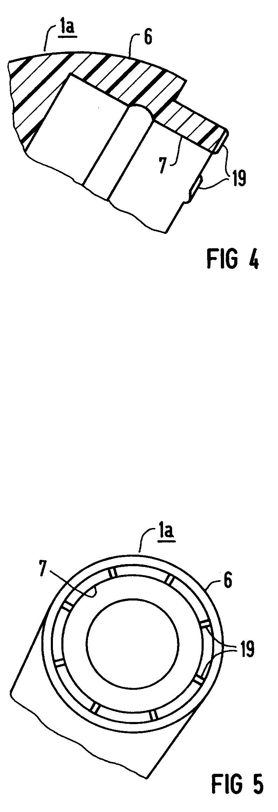

Zur axialen Rastung und Fixierung der beiden Handstückteile 1a, 1b ist eine an sich bekannte O-Ring-Rastung 18 vorgesehen. Der O-Ring dient sowohl zur Dichtung als auch infolge der Elastizität als Drehrastung für die beiden Teile. Um die Handstückteile in definierten Drehstellungen fixieren zu können, sind stirnseitig des Handstückteiles 1a am Umfang mehrere axiale Vorsprünge 19 vorhanden (FIG 4, 5), die in entsprechend ausgebildete Vertiefungen am Gegenstück dem stirnseitigen Ende des Handstückteiles 1b eingreifen.

Alternativ zu der dargestellten Drehgelenkanordnung mit zwei konzentrisch zueinander angeordneten und ineinander greifenden zylindrischen Abschnitten ist es auch denkbar, zwei ineinander greifende, kugelförmige Abschnitte vorzusehen. Mit einer solchen Anordnung lassen sich die Verstellmöglichkeiten noch erweitern.

Das eine, gerade Ende 3a des Schlauches 3 ist mittels einer O-Ring-Steckverbindung 20 leicht lösbar am Saughandstück 1 gehaltert. Das andere Schlauchende mündet über einen nicht dargestellten 90°-Rohrbogen in einen Filterblock ein, der mittels einer weiteren O-Ring-Rastung im Gerät so eingebaut ist, daß ein drehbarer, leicht lösbarer Anschluß erzielt wird.

## Patentansprüche

1. Zahnärztliches Saughandstück, an welchem einerseits eine Saugkanüle (2) und andererseits ein Saugschlauch (3) anschließbar ist, **dadurch gekennzeichnet,** daß das Handstück (1) axial aneinander grenzende und durch ein Drehgelenk (4) miteinander verbundene Teile (1a, 1b) enthält, welche ineinander übergehende Leitungskanäle (10, 12) aufweisen, und daß das Drehgelenk (4) so ausgebildet ist, daß die beiden Handstückteile (1a, 1b) von einer geraden Position mit im wesentlichen fluchtenden Leitungskanälen (FIG 3) in eine abgewinkelte Position mit unter einem Winkel (α) zueinander geneigt angeordneten Leitungskanälen (FIG 2) einstellbar sind.

2. Saughandstück nach Anspruch 1, **dadurch gekennzeichnet,** daß das Drehgelenk (4) so ausgebildet ist, daß die Leitungskanäle (10, 12) in jeder Einstellposition den gleichen Durchflußquerschnitt aufweisen.

3. Saughandstück nach Anspruch 1 oder 2, **dadurch gekennzeichnet,** daß die beiden Handstückteile (1a, 1b) miteinander korrespondierende und ineinander greifende, das Drehgelenk (4) bildende Zylinderflächen (7, 8) aufweisen.

4. Saughandstück nach Anspruch 3, **dadurch gekennzeichnet,** daß das der Saugkanüle (2) abgewandte Ende (6) des vorderen Handstückteiles (1a) mit einer inneren Mantelfläche (7) eine äußere Mantelfläche (8) des rückwärtigen Handstückteiles (1b) übergreift.

5. Saughandstück nach einem der Ansprüche 1 bis 5, **dadurch gekennzeichnet,** daß zur axialen Fixierung der beiden Handstückteile (1a, 1b) eine O-Ring-Rastung (13) vorgesehen ist.

6. Saughandstück nach einem der Ansprüche 1 bis 5, **dadurch gekennzeichnet,** daß an miteinander korrespondierenden Flächen, vorzugsweise an stirnseitigen Flächen (14) der Handstückteile (1a, 1b), Rastglieder (19) zur Fixierung der Handstückteile in mehreren Drehpositionen vorhanden sind.

7. Saughandstück nach einem der Ansprüche 1 bis 4, **dadurch gekennzeichnet,** daß die beiden Handstückteile (1a, 1b) im Verbindungsbereich Zonen einer Kugel (Kugelschicht) bilden.

8. Saughandstück nach Anspruch 3, **dadurch gekennzeichnet,** daß die die Zylinderflächen (7, 8) aufweisenden Enden (6, 9) der Handstückteile (1a, 1b) unter vorzugsweise gleichen Winkeln (α) gegenüber den Rotationssymmetrieachsen der anderen Enden dieser Handstückteile geneigt angeordnet sind.

9. Saughandstück nach Anspruch 8, **dadurch gekennzeichnet,** daß die Winkel (α) 30° betragen.

10. Saughandstück nach Anspruch 8, **dadurch gekennzeichnet,** daß die Rotationssymmetrieachsen (11, 12) der beiden Handstückteile (1a, 1b) miteinander fluchten, daß die um den Winkel (α) zu den Rotationssymmetrieachsen geneigten, stirnseitigen Anschlußflächen (13, 14) einen kreisförmigen Querschnitt aufweisen und daß die beiden Leitungskanäle (15, 16) durch bogenförmige Krümmungen (17) miteinander verbunden sind.

11. Saughandstück nach einem der Ansprüche 1 bis 7, **dadurch gekennzeichnet,** daß das rückwärtige Handstückteil (1b) einen Steckanschluß (11) für den lösbaren Anschluß des Saugschlauches (3) an das Saughandstück (1) enthält.

## Claims

1. Dental suction handpiece, to which there can be connected on one side a suction channel (2) and on the other side a suction tube (3), characterized in that the handpiece (1) contains parts (1a, 1b) which adjoin one another axially and are connected to one another by a hinge joint (4), the parts having transmission ducts (10, 12) passing over into one another, and in that the hinge joint (4) is constructed in such a way that the two handpiece parts (1a, 1b) can be adjusted from a straight position with substantially flush transmission ducts (Figure 3) into an angular position with transmission ducts arranged inclined to one another at an angle (α) (Figure 2).

2. Suction handpiece according to claim 1, characterized in that the hinge joint (4) is constructed in such a way that the transmission ducts (10, 12) in each adjusting position have the same cross section of passage.

3. Suction handpiece according to claim 1 or 2, characterized in that the two handpiece parts (1a, 1b) have cylinder faces (7, 8) corresponding with one another and engaging into one another, forming the hinge joint (4).

4. Suction handpiece according to claim 3, characterized in that the end (6) of the front handpiece part (1a) away from the suction channel (2) engages with an inner surface (7) over an outer surface (8) of the rearward handpiece part (1b).

5. Suction handpiece according to one of claims 1 to 5, characterized in that an O-ring catch (13) is provided for the axial fixing of the two handpiece parts (1a, 1b).

6. Suction handpiece according to one of claims 1 to 5, characterized in that at faces corresponding with one another, preferably at end faces (14) of the handpiece parts (1a, 1b), catch elements (19) are present for fixing the handpiece parts in several positions of rotation.

7. Suction handpiece according to one of claims 1 to 4, characterized in that the two handpiece parts (1a, 1b) in the connection region form zones of a sphere (spherical layer).

8. Suction handpiece according to claim 3, characterized in that the ends (6, 9) of the handpiece parts (1a, 1b) having the cylinder faces (7, 8) are arranged inclined at preferably equal angles (α) relative to the axes of rotational symmetry of the other ends of these handpiece parts.

9. Suction handpiece according to claim 8, characterized in that the angles (α) amount to 30°.

10. Suction handpiece according to claim 8, characterized in that the axes of rotational symmetry (11, 12) of the two handpiece parts (1a, 1b) are flush with one another, in that the end connection faces (13, 14) inclined by the angle (α) to the axes of rotational symmetry have a circular cross section and in that the two transmission ducts (15, 16) are connected to one another by arched curvatures (17).

11. Suction handpiece according to one of claims 1 to 7, characterized in that the rearward handpiece part (1b) contains a plug junction (11) for the releasable connection of the suction tube (3) to the suction handpiece (1).

## Revendications

1. Pièce à main d'aspiration de dentisterie, à laquelle peuvent se raccorder, d'une part, une canule d'aspiration (2), et, d'autre part, un tuyau d'aspiration (3), caractérisée par le fait que la pièce à main (1) comportent des éléments (1a,1b), qui sont contigus axialement et sont reliés entre eux par une articulation tournante (4) et possèdent des canaux (10,12) pour conduites, qui se rejoignent, et que l'articulation tournante (4) est constituée de telle sorte que les deux éléments (1a,1b) de la pièce à main peuvent être réglés depuis une position rectiligne, dans laquelle les canaux logeant les conduites sont sensiblement alignés (figure 3), dans une position coudée, dans laquelle les canaux logeant les conduites sont inclinés l'un par rapport à l'autre sous un angle (α) (figure 2).

2. Pièce à main d'aspiration suivant la revendication 1, caractérisée par le fait que l'articulation tournante (4) est agencée de telle sorte que les canaux (10,12) logeant les conduites possèdent, dans chaque position de réglage, la même section transversale de passage.

3. Pièce à main d'aspiration suivant la revendication 1 ou 2, caractérisée par le fait que les deux moitiés (1a,1b) de la pièce à main possèdent des surfaces cylindriques (7,8), qui se correspondent, s'engagent l'une dans l'autre et forment l'articulation tournante (4).

4. Pièce à main d'aspiration suivant la revendication 4, caractérisée par le fait que l'extrémité (6), tournée à l'opposé de la canule d'aspiration, la pièce de l'élément avant (1a) de la pièce à main s'engage, par une surface enveloppe intérieure (7), par-dessus une surface enveloppe extérieure (8) de l'élément arrière (1b) de la pièce à main.

5. Pièce à main d'aspiration suivant l'une des revendications 1 à 5, caractérisée par le fait qu'un système d'encliquetage à joint torique (13) est prévu pour la fixation axiale des deux éléments (1a,1b) de la pièce à main.

6. Pièce à main d'aspiration suivant l'une des revendications 1 à 5, caractérisée par le fait que sur des surfaces, qui se correspondent, de préférence sur des surfaces frontales (14) des éléments (1a,1b) de la pièce à main, il est prévu des organes d'encliquetage (19) permettant la fixation des éléments de la pièce à main dans plusieurs positions en rotation.

7. Pièce à main d'aspiration suivant l'une des revendications 1 à 4, caractérisée par le fait que les deux éléments (1a,1b) de la pièce à main forment, au niveau de la liaison, des zones d'une sphère (couche sphérique).

8. Pièce à main d'aspiration suivant la revendication 3, caractérisée par le fait que les extrémités (6,9), qui portent les surfaces cylindriques (7,8), des éléments (1a,1b) de la pièce à main sont disposées en étant inclinées de préférence d'angles identiques (α) par rapport aux axes de symétrie de révolution des autres extrémités de ces éléments de la pièce à main.

9. Pièce à main d'aspiration suivant la revendication 8, caractérisée par le fait que les angles (α) sont égaux à 30°.

10. Pièce à main d'aspiration suivant la revendication 8, caractérisée par le fait que les axes de symétrie de révolution (11,12) des deux éléments (1a,1b) de la pièce à main sont alignés, que les surfaces frontales de raccordement (13,14), inclinées des angles (α) par rapport aux axes de symétrie de révolution, possèdent une section transversale de forme circulaire et que les deux canaux (15,16) logeant les conduites sont reliés entre eux par des éléments coudés en forme d'arcs (17).

11. Pièce à main d'aspiration suivant l'une des revendications 1 à 7, caractérisée par le fait que l'élément arrière (1b) de la pièce à main comportent un raccord à enfichage (11) pour le raccordement amovible du tuyau d'aspiration (3) à la pièce à main d'aspiration (1).
